# EUROPÄISCHE PATENTSCHRIFT

(11) **EP 2 582 545 B1**
(45) Veröffentlichungstag und Bekanntmachung des Hinweises auf die Patenterteilung: **23.11.2016**
(21) Anmeldenummer: 11721764.6
(22) Anmeldetag: 19.05.2011
(51) Int. Cl.: B60Q 3/02, H05B 33/08, H02J 9/00, H02J 9/02, B61D 29/00

(54) **SCHIENENFAHRZEUGNOTBELEUCHTUNG**
EMERGENCY LIGHTING FOR RAILWAY VEHICLE
ECLAIRAGE DE SECOURS POUR VEHICULE FERROVIAIRE

(30) Priorität: 21.06.2010 AT 10202010
(43) Veröffentlichungstag der Anmeldung: 24.04.2013
(73) Patentinhaber: Siemens AG Österreich, 1210 Wien (AT)
(72) Erfinder: AMBROZ, Anton, A-1120 Wien (AT); ULREICH, Klaus, A-7423 Pinkafeld (AT)
(74) Vertreter: Maier, Daniel Oliver
(86) Internationale Anmeldenummer: PCT/EP2011/058168
(87) Internationale Veröffentlichungsnummer: WO 2011/160903

(56) Entgegenhaltungen:
- DE-A1-102006 032 249
- DE-U1- 29 924 584
- GB-A- 2 409 023
- US-A1- 2005 219 860
- US-A1- 2006 146 553
- US-B1- 7 218 056

## Beschreibung

### Technisches Gebiet

Die Erfindung betrifft eine Schienenfahrzeugnotbeleuchtung.

### Stand der Technik

Passagierschienenfahrzeuge werden mit elektrischen Notbeleuchtungen ausgestattet, welche es den Passagieren erlaubt, sich im Fahrzeug zu orientieren. Diese Notbeleuchtungen werden üblicherweise aus dafür vorgesehenen Akkumulatoren gespeist und beleuchten den Innenraum des Fahrzeugs im Fall, dass keine externe Energieversorgung zur Verfügung steht. Als Notbeleuchtung werden dabei einzelne ausgewählte Lampen der Hauptbeleuchtung herangezogen, welche aus dem Notstromkreis gespeist werden und somit in Betrieb bleiben, auch wenn die Lampen, welche von der Hauptstromversorgung gespeist werden erlöschen. Typischerweise werden in Passagierschienenfahrzeugen 20% bis 30% der Lampen aus dem Notstromkreis gespeist. Die dabei eingesetzten Leuchtmittel sind üblicherweise Leuchtstofflampen oder Glühbirnen. Diese genannten Leuchtmittel geben Licht über eine große Oberfläche ab und führen somit zu keiner Blendwirkung. Auch im Betriebszustand als Notbeleuchtung, in welchen nur ein Teil der Lampen in Betrieb ist, stellt sich üblicherweise keine Blendwirkung für die Passagiere ein. Diese Blendwirkung ist gemäß der für Passagierschienenfahrzeuge gültigen Norm EN 13272 auf einen bestimmten Wert zu begrenzen. Aufgrund der hohen Lebensdauer und Energieeffizienz werden neuerdings Lichtemittierende Dioden (LED) bevorzugt als Leuchtmittel eingesetzt. Diese LED weisen Eigenschaften auf, welche sie für den Einsatz in Schienenfahrzeugen besonders vorteilhaft geeignet erscheinen lassen. Neben der Lebensdauer und Energieeffizienz weisen LED eine sehr hohe Robustheit auf und beanspruchen nur sehr geringen Bauraum. Die hohe Energieeffizienz der LED äußert sich weiters in geringer Wärmeentwicklung und somit vereinfachtem Einbau. LED können allerdings nicht direkt an die Stromversorgung eines Schienenfahrzeugs angeschlossen werden, sondern benötigen ein elektronisches Vorschaltgerät, welches die erforderliche (geringe) Betriebspannung zur Verfügung stellt. Die geringe Größe von LED Leuchtmitteln bedingt allerdings eine hohe Leuchtdichte, welche zu Blendwirkungen führen kann. Die gebräuchliche Ausführung von Notbeleuchtungen, in welcher im Notlichtbetrieb nur ein Teil der Lampen in Betrieb bleiben, führt jedoch beim Einsatz von LED zu einer inakzeptablen Blendwirkung.

Aus dem Stand der Technik sind Notbeleuchtungen bekannt, wobei die Patentschrift US 2006/0146553 A1 eine Leseleuchte mit einer Notlichtfunktion offenbart, welche insbesondere für den Einsatz in Fahrzeugen, bzw. Flugzeugen geeignet ist. Als Leseleuchte weist diese Notbeleuchtung ein Bedienelement für einen Benutzer auf, über welches er die Leuchtstärke verändern kann. Ist ein Notlicht erforderlich, so kann zentral eine bestimmte Leuchtstärke der Leseleuchte vorgegeben werden, unabhängig von der durch den Benutzer eingestellten Leuchtstärke.

### Darstellung der Erfindung

Der Erfindung liegt daher die Aufgabe zugrunde, eine Schienenfahrzeugnotbeleuchtung anzugeben, welche auch beim Einsatz von LED als Leuchtmittel die Blendwirkung auf die Passagiere minimiert.

Die Aufgabe wird durch eine Schienenfahrzeugnotbeleuchtung mit den Merkmalen des Anspruchs 1 gelöst. Vorteilhafte Ausgestaltungen sind Gegenstand untergeordneter Ansprüche.

Dem Grundgedanken der Erfindung nach werden alle LED-Leuchtmittel einer Schienenfahrzeugpassagierraumbeleuchtung als Notbeleuchtung herangezogen und aus verschiedenen Notlichtkreisen versorgt. Es werden dieselben Lampen, bzw. Leuchtmittel sowohl als Hauptbeleuchtung als auch als Notbeleuchtung eingesetzt. In der Betriebsart Notbeleuchtung bleiben alle auch für die Hauptbeleuchtung eingesetzten Leuchtmittel in Betrieb, werden jedoch in ihrer Leuchtstärke reduziert.

Dadurch ist der Vorteil erzielbar, eine blendfreie Schienenfahrzeugnotbeleuchtung unter Einsatz von LED als Leuchtmittel aufbauen zu können.
Gegenständliche Erfindung ermöglicht es, die relative Lichtverteilung in einem Schienenfahrzeug unverändert zu belassen wenn auf die Notbeleuchtung umgeschaltet wird. Den Passagieren wird somit eine räumliche Orientierung gewährleistet, ohne dass eine Blendwirkung auftreten kann.

Ein weiterer Vorteil der Erfindung ist es, dass der Übergang der Leuchtstärke zwischen Haupt- und Notbeleuchtung frei gestaltet werden kann. Insbesondere sind eine zeitlich verzögerte Reduktion der Leuchtstärke, ein stufenloser Übergang oder ein zeitlich gestaffelter mehrstufiger Übergang von der Hauptleuchtstärke auf die Notleuchtstärke vorteilhaft.
Da zum Betrieb von LED ein elektronisches Vorschaltgerät erforderlich ist, welches unter anderem die schienenfahrzeugübliche Bordspannung auf die LED-Betriebsspannung reduziert, kann die zur Leuchtstärkenreduktion erforderliche elektronische Schaltungstechnik in dieses Vorschaltgerät integriert werden.

Weiters ist es vorteilhaft, die Energieversorgung der Schienenfahrzeugpassagierraumbeleuchtung der Notstromversorgung zu entnehmen und die Hauptstromversorgung als Steuersignal an das elektronische Vorschaltgerät zu führen. Dadurch ist gewährleistet, dass ein sicherer Notlichtbetrieb erfolgen kann, da die Energieversorgung der gesamten Beleuchtung immer aus der konstant vorhandenen Notstromversorgung erfolgt. Im Normalbetrieb (mit aufrechter Hauptstromversorgung) wird der Akkumulator der Notstromversorgung kontinuierlich geladen, sodass dieser durch die Energieentnahme der Hauptbeleuchtung nicht entladen wird.

### Kurzbeschreibung der Zeichnungen

Es zeigen beispielhaft:
**Fig.1** ein Prinzipschaltbild einer Schienenfahrzeugpassagierraumbeleuchtung.
**Fig.2** ein Prinzipschaltbild einer Schienenfahrzeugpassagierraumbeleuchtung mit erfindungsgemäßer Notbeleuchtung.
**Fig.3** den zeitlichen Übergang zwischen der Haupt- und der Notlichtleuchtstärke - sofortiger Übergang.
**Fig.4** den zeitlichen Übergang zwischen der Haupt- und der Notlichtleuchtstärke - stufenloser Übergang.
**Fig.5** den zeitlichen Übergang zwischen der Haupt- und der Notlichtleuchtstärke - verzögerter Übergang.
**Fig.6** den zeitlichen Übergang zwischen der Haupt- und der Notlichtleuchtstärke - gestufter Übergang.

### Ausführung der Erfindung

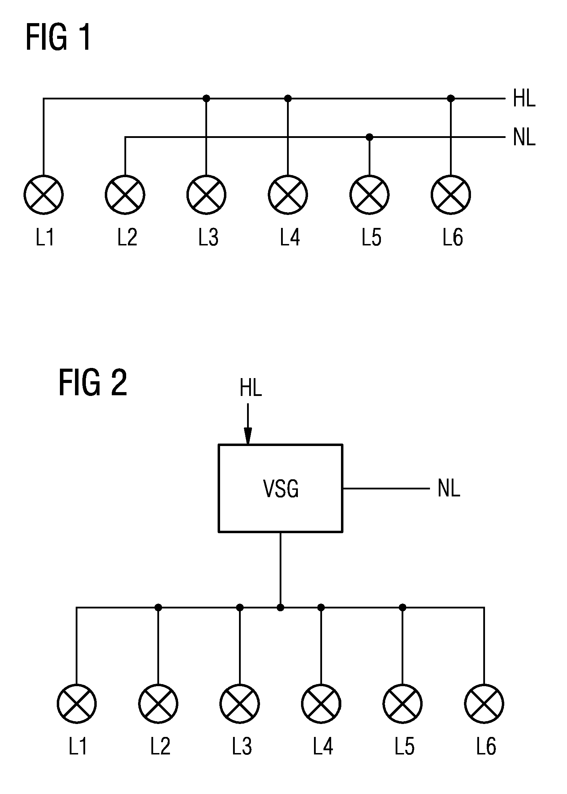

**Fig.1** zeigt beispielhaft und schematisch ein Prinzipschaltbild einer Schienenfahrzeugpassagierraumbeleuchtung. Die gezeigte Beleuchtung umfasst sechs Lampen L1...L6, wobei die Lampen L1, L3, L4 und L6 aus der Hauptlichtenergieversorgung HL versorgt werden und die Lampen L2 und L5 aus der Notlichtenergieversorgung NL versorgt werden. Ist die Hauptlichtenergieversorgung HL nicht verfügbar, tritt der Notlichtbetrieb ein, wobei in diesem Notlichtbetrieb die Lampen L2 und L5 in Betrieb sind. Somit kann sich durch die verringerte Anzahl an in Betrieb befindlichen Lampen, bzw. Leuchtmitteln eine Blendwirkung ergeben. Insbesondere beim Einsatz von LED Leuchtmitteln ist eine Blendwirkung praktisch nicht vermeidbar.

**Fig.2** zeigt beispielhaft und schematisch ein Prinzipschaltbild einer Schienenfahrzeugpassagierraumbeleuchtung mit erfindungsgemäßer Notbeleuchtung. Die gezeigte Beleuchtung umfasst sechs Lampen L1...L6, ein Vorschaltgerät VSG, eine Hauptlichtenergieversorgung HL und eine Notlichtenergieversorgung NL. Das Vorschaltgerät VSG stellt die zu Betrieb der Lampen L1...L6 erforderliche Betriebsspannung zur Verfügung, welche insbesondere beim Einsatz von LED-Leuchtmitteln wesentlich geringer sein kann als die Spannung der Hauptlichtenergieversorgung HL und der Notlichtenergieversorgung NL. Im Hauptlichtbetrieb leuchten alle Lampen L1...L6 mit der Hauptlichtstärke HLS. Im Notlichtbetrieb leuchten, ebenso wie im Hauptlichtbetrieb, alle Lampen L1...L6, jedoch mit einer zur Hauptlichtstärke HLS unterschiedlichen (geringeren) Notlichtstärke NLS.

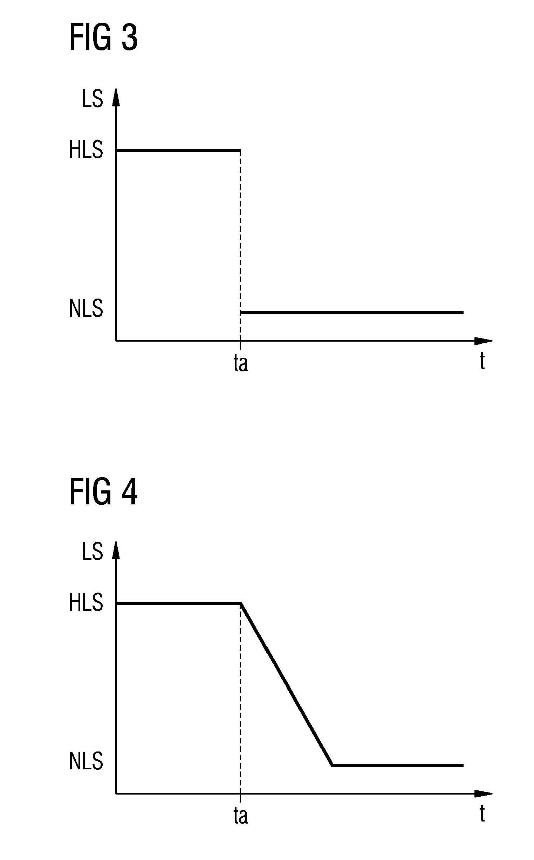

**Fig.3** zeigt beispielhaft und schematisch den zeitlichen Übergang zwischen der Haupt- und der Notlichtleuchtstärke. Es ist der zeitliche Verlauf der Leuchtstärke LS einer Schienenfahrzeugpassagierraumbeleuchtung dargestellt. Die vertikale Achse stellt die Leuchtstärke LS dar, die horizontale Achse stellt die Zeit t dar. Zu einem Ausfallzeitpunkt ta wird die Leuchtstärke LS von der Hauptlichtstärke HLS auf die Notlichtstärke NLS reduziert.

**Fig.4** zeigt beispielhaft und schematisch den zeitlichen Übergang zwischen der Haupt- und der Notlichtleuchtstärke. Es ist, ähnlich wie in Fig.3, der Übergang der Leuchtstärke LS von der Hauptlichtstärke HLS auf die Notlichtstärke NLS dargestellt. In diesem Ausführungsbeispiel erfolgt ein stufenloser Übergang von der Hauptlichtstärke HLS auf die Notlichtstärke NLS.

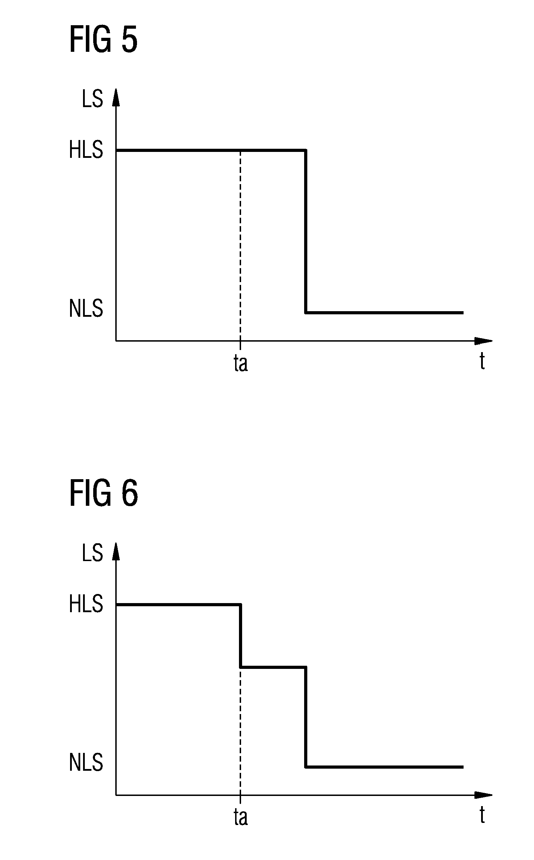

**Fig.5** zeigt beispielhaft und schematisch den zeitlichen Übergang zwischen der Haupt- und der Notlichtleuchtstärke. In diesem Ausführungsbeispiel erfolgt ein gegenüber dem Ausfallzeitpunkt ta zeitlich verzögerter Übergang von der Hauptlichtstärke HLS auf die Notlichtstärke NLS.

**Fig.6** zeigt beispielhaft und schematisch den zeitlichen Übergang zwischen der Haupt- und der Notlichtleuchtstärke. In diesem Ausführungsbeispiel erfolgt ein gestufter Übergang von der Hauptlichtstärke HLS auf die Notlichtstärke NLS.

### Liste der Bezeichnungen

- L1...L6: Lampe 1 ... Lampe 6
- HL: Hauptlichtenergieversorgung
- NL: Notlichtenergieversorgung
- VSG: Vorschaltgerät
- t: Zeit
- ta: Ausfallzeitpunkt
- LS: Leuchtstärke
- HLS: Hauptlichtstärke
- NLS: Notlichtstärke

## Patentansprüche

1. Schienenfahrzeugnotbeleuchtung für ein Schienenfahrzeug mit einer Hauptbeleuchtung aus lichtemittierenden Dioden, wobei ein Vorschaltgerät (VSG) vorgesehen ist, welches die zum Betrieb der Leuchtmittel erforderliche Betriebsspannung zur Verfügung stellt und in Abhängigkeit von dem Vorhandensein einer Hauptstromversorgung (HL) die Leuchtstärke der Leuchtmittel zwischen einer Hauptlichtstärke (HLS) und einer Notlichtstärke (NLS) steuert, **dadurch gekennzeichnet, dass** bei aktiver Hauptstromversorgung (HL) alle Leuchtmittel der Hauptbeleuchtung mit der Hauptlichtstärke (HLS) leuchten und bei fehlender Hauptstromversorgung (HL) alle Leuchtmittel der Hauptbeleuchtung mit der Notlichtstärke (NLS) leuchten, wobei die Energie für den Betrieb der Leuchtmittel sowohl im Hauptlichtbetrieb als auch im Notlichtbetrieb der Notstromversorgung (NL) entnommen wird.

2. Schienenfahrzeugnotbeleuchtung nach Anspruch 1, **dadurch gekennzeichnet, dass** der Übergang zwischen der Hauptlichtstärke (HLS) und der Notlichtstärke (NLS) stufenlos erfolgt.

3. Schienenfahrzeugnotbeleuchtung nach einem der Ansprüche 1 oder 2, **dadurch gekennzeichnet, dass** der Übergang zwischen der Hauptlichtstärke (HLS) und der Notlichtstärke (NLS) gegenüber dem Ausfallzeitpunkt (ta) der Hauptlichtenergieversorgung (HL) zeitlich verzögert erfolgt.

## Claims

1. Rail vehicle emergency lighting for a rail vehicle, having a main lighting system consisting of light emitting diodes, wherein a ballast (VSG) is provided which supplies the operating voltage required for operating the light sources and controls the luminous intensity of the light sources between a main lighting intensity (HLS) and an emergency lighting intensity (NLS) depending on whether a main lighting power supply (HL) is available, **characterised in that** when the main lighting power supply (HL) is active, all light sources of the main lighting are lit with the main lighting intensity (HLS) and, if the main lighting power supply (HL) fails, all light sources of the main lighting are lit with the emergency lighting intensity (NLS), wherein the power for operating the light sources is drawn from the emergency lighting power supply (NL) during both main lighting mode and emergency lighting mode.

2. Rail vehicle emergency lighting according to claim 1, **characterised in that** the transition between the main lighting intensity (HLS) and the emergency lighting intensity (NLS) is stepless.

3. Rail vehicle emergency lighting according to one of claims 1 or 2, **characterised in that** the transition between the main lighting intensity (HLS) and the emergency lighting intensity (NLS) is time-delayed with respect to the failure instant (ta) of the main lighting power supply (HL).

## Revendications

1. Éclairage de secours pour véhicule ferroviaire avec un éclairage principal composé de diodes électroluminescentes, dans lequel un régulateur de puissance (VSG) est prévu, lequel met à disposition la tension d'alimentation nécessaire à l'exploitation des agents lumineux et pilote l'intensité lumineuse des agents lumineux entre une intensité lumineuse principale (HLS) et une intensité lumineuse de secours (NLS) en fonction de la présence d'une alimentation en courant principale (HL), **caractérisé en ce qu**'en présence d'une alimentation en courant principale (HL) active, tous les agents lumineux de l'éclairage principal s'illuminent selon l'intensité lumineuse principale (HLS) et à défaut d'alimentation en courant principale (HL), tous les agents lumineux de l'éclairage principal s'illuminent selon l'intensité lumineuse de secours (NLS), l'énergie nécessaire au fonctionnement des agents lumineux étant prélevée auprès de l'alimentation de secours (NL) tant pour l'intensité lumineuse principale que pour l'intensité lumineuse de secours.

2. Éclairage de secours pour véhicule ferroviaire selon la revendication 1, **caractérisé en ce que** la transition entre l'intensité lumineuse principale (HLS) et l'intensité lumineuse de secours (NLS) s'opère de manière continue.

3. Éclairage de secours pour véhicule ferroviaire selon l'une des revendications 1 ou 2, **caractérisé en ce que** la transition entre l'intensité lumineuse principale (HLS) et l'intensité lumineuse de secours (NLS) s'opère selon un retardement temporel par rapport à l'instant de défaillance (ta) de l'alimentation en courant pour éclairage principal (HL).
